# EUROPÄISCHE PATENTSCHRIFT

(11) **EP 3 316 456 B1**
(45) Veröffentlichungstag und Bekanntmachung des Hinweises auf die Patenterteilung: **12.12.2018**
(21) Anmeldenummer: 16195668.5
(22) Anmeldetag: 26.10.2016
(51) Int. Cl.: H02K 7/00

(54) **MOTORWELLE EINES ELEKTROMOTORS SOWIE VERFAHREN ZU DESSEN HERSTELLUNG**
MOTORWELLE EINES ELEKTROMOTORS SOWIE VERFAHREN ZU DESSEN HERSTELLUNG
MOTORWELLE EINES ELEKTROMOTORS SOWIE VERFAHREN ZU DESSEN HERSTELLUNG

(43) Veröffentlichungstag der Anmeldung: 02.05.2018
(73) Patentinhaber: FELSS Systems GmbH, 75203 Königsbach-Stein (DE)
(72) Erfinder: Marré, Michael, D-76189 Karlsruhe (DE); Fauth, Arthur, D-75015 Bretten (DE); Haller, Stefan, D-70567 Stuttgart (DE); Heinrichs, Serjosha, D-75177 Pforzheim (DE); Wagner, Henning, D-75196 Remchingen (DE)
(74) Vertreter: Kohler Schmid Möbus Patentanwälte

(56) Entgegenhaltungen:
- WO-A2-03/032469
- DE-A1-102010 040 017
- DE-U1- 20 307 198
- US-A1- 2010 061 670
- US-A1- 2016 049 845
- FELSS HOLDING GMBH: "Kaltumformung: Rundkneten und Axialformen - Ressourceneffizienter Leichtbau für die Masse", MAV KOMPETENZ IN DER SPANENDEN FERTIGUNG, Bd. 06/2012, 20. Juni 2012 (2012-06-20), XP055349526,

## Beschreibung

Die Erfindung betrifft ein Verfahren zur Herstellung einer Motorwelle eines Rotors eines Elektromotors, im Rahmen dessen ein erstes Modul der Motorwelle sowie ein weiteres Modul der Motorwelle hergestellt und miteinander verbunden werden,
- wobei das erste Modul der Motorwelle hergestellt wird, indem ein Grundmodul des ersten Moduls an einer dem weiteren Modul der Motorwelle zugeordneten Seite mit einem modulseitigen Anbindungselement versehen wird,
- wobei das weitere Modul der Motorwelle hergestellt wird, indem ein Grundmodul des weiteren Moduls an einer dem ersten Modul der Motorwelle zugeordneten Seite mit einem modulseitigen Anbindungselement versehen wird und
- wobei das erste Modul der Motorwelle und das weitere Modul der Motorwelle durch Fügen der beiderseitigen modulseitigen Anbindungselemente miteinander verbunden werden.

Die Erfindung betrifft des Weiteren einen Modulsatz zur Herstellung einer Motorwelle eines Rotors eines Elektromotors nach dem vorstehenden Verfahren sowie eine nach dem vorstehenden Verfahren hergestellte Motorwelle eines Rotors eines Elektromotors.

Herkömmliche Elektromotoren bestehen aus einem Stator und einem Rotor, der seinerseits eine Motorwelle aufweist. Aufgrund von Kräften, die statorseitige und rotorseitige Magnetfelder aufeinander ausüben, wird der Rotor einschließlich der Motorwelle in eine Drehbewegung versetzt. Die umlaufende Motorwelle kann direkt oder über ein Getriebe mit einer Arbeitsmaschine verbunden werden. Zu diesem Zweck ist die Motorwelle an wenigstens einem Wellenende mit einer Kupplungseinrichtung versehen. Darüber hinaus wird die Motorwelle häufig genutzt, um mit Hilfe entsprechender Messvorrichtungen die Motordrehzahl zu ermitteln und/oder um die Motordrehzahl mittels einer auf die Motorwelle wirkenden Bremsvorrichtung zu reduzieren.

Gattungsgemäßer Stand der Technik ist offenbart in DE 203 07 198 U1. Diese Druckschrift betrifft eine modular aufgebaute Motorwelle eines Rotors eines Elektromotors, im Faller derer ein mittlerer Wellenabschnitt durch Pressverbindungen mit einem ersten und einem zweiten äußeren Wellenabschnitt verbunden ist. Der mittlere Wellenabschnitt weist an beiden axialen Enden eine Bohrung auf, welche ein Ende eines der äußeren Wellenabschnitte aufnimmt und deren Innendurchmesser an den Außendurchmesser des jeweiligen äußeren Wellenabschnitts angepasst ist.

Weiterer gattungsgemäßer Stand der Technik ist offenbart in US 2016/0049845 A1. Diese Druckschrift offenbart eine magnetische Rotorwelle aus mehreren Wellenmodulen. Zwei aneinander anschließende Wellenmodule können an ihren einander zugewandten Stirnseiten mit Formschlusselementen versehen sein, mittels derer die beiden Wellenmodule exakt gegeneinander ausgerichtet und/oder in Umfangsrichtung formschlüssig miteinander verbunden werden. Auf die Verfahren, nach denen die Formschlusselemente hergestellt werden, geht die Druckschrift nicht ein.

Eine fertigungstechnische Optimierung des Standes der Technik ist Aufgabe der vorliegenden Erfindung.

Erfindungsgemäß gelöst wird diese Aufgabe durch das Verfahren gemäß Patentanspruch 1, durch den Modulsatz gemäß Patentanspruch 8 sowie durch die Motorwelle gemäß Patentanspruch 9.

Im Falle der Erfindung wird an einem ersten Modul oder an einem weiteren Modul einer Motorwelle eines Elektromotors ein modulseitiges Anbindungselement durch Kaltumformen in Form von Axialformen eines in aller Regel als Halbzeug vorliegenden und aus einem für Motorwellen gebräuchlichen metallischen Werkstoffen bestehenden Grundmoduls erstellt. Das Axialformen bietet die Möglichkeit, die Anbindungselemente an dem oder den Wellenmodulen mit einem verhältnismäßig geringen fertigungstechnischen Aufwand hochgenau zu erzeugen. Eine Nachbearbeitung der Anbindungselemente im Anschluss an den Umformprozess ist in aller Regel verzichtbar.

Beim Axialformen werden das Grundmodul des betreffenden Wellenmoduls und eine Matrize in axialer Richtung des Grundmoduls relativ zueinander bewegt. Die Geometrie der Matrize bildet sich dabei auf dem Grundmodul des Wellenmoduls ab und erzeugt dadurch das modulseitige Anbindungselement. Bei Verwendung einer entsprechenden Matrize kann als modulseitiges Anbindungselement insbesondere eine Verzahnung erzeugt werden.

Von dem ersten und dem weiteren Modul der Motorwelle wird erfindungsgemäß lediglich eines der Module durch Axialformen eines Grundmoduls mit dem modulseitigen Anbindungselement versehen. Das Grundmodul des jeweils anderen Wellenmoduls wird zur Fertigung des modulseitigen Anbindungselements trennend bearbeitet. Dabei sind Trennverfahren unterschiedlicher Art, insbesondere spanende Trennverfahren, denkbar.

Durch Fügen des modulseitigen Anbindungselements des ersten Wellenmoduls und des modulseitigen Anbindungselements des weiteren Wellenmoduls werden das erste Modul und das weitere Modul der Motorwelle miteinander verbunden. Durch die Verbindung des ersten Moduls und des weiteren Moduls kann sich der gesamte Körper der Motorwelle ergeben. Es ist aber auch denkbar, dass das erste Modul und das weitere Modul gemeinsam nur einen Teil der Motorwelle ausbilden.

Der erfindungsgemäße Modulsatz umfasst wenigstens ein Modul, das als erstes Modul vorgesehen ist sowie wenigstens zwei weitere Module. Die weiteren Module unterscheiden sich hinsichtlich ihrer Beschaffenheit. Beispielsweise können die weiteren Module aus unterschiedlichen Werkstoffen bestehen, unterschiedliche Geometrien beziehungsweise Dimensionen besitzen und/oder unterschiedliche Funktionsmerkmale aufweisen. Den weiteren Modulen gemeinsam ist ihre Kompatibilität mit dem ersten Wellenmodul dahingehend, dass jedes der weiteren Module ein modulseitiges Anbindungselement aufweist, das geeignet ist, im Zusammenwirken mit dem modulseitigen Anbindungselement des ersten Moduls eine Verbindung zwischen dem ersten Modul und dem weiteren Modul der Motorwelle herzustellen. Zur Herstellung einer Motorwelle kann das erste Modul wahlweise mit einem der weiteren Module kombiniert werden. Auf diese Art und Weise lässt sich eine Motorwelle derart konfigurieren, dass sie optimal auf den jeweiligen Anwendungsfall abgestimmt ist. Sofern unterschiedliche Anwendungsfälle dies zulassen, kann ein und dasselbe erste Modul für sämtliche Anwendungsfälle verwendet werden und eine bauliche Anpassung der Motorwelle an den konkreten Anwendungsfall ausschließlich über das weitere Modul erfolgen.

Besondere Ausführungsarten des Verfahrens und der Vorrichtungen gemäß den unabhängigen Patentansprüchen ergeben sich aus den abhängigen Patentansprüchen 2 bis 7.

In vorteilhafter Ausgestaltung der Erfindung wird das Grundmodul des ersten Moduls und/oder das Grundmodul des weiteren Moduls der Motorwelle bei der Modulherstellung nicht nur mit einem modulseitigen Anbindungselement sondern auch noch mit weiteren Funktionsmerkmalen versehen.

Gemäß Patentanspruch 2 ist vorgesehen, dass an dem betreffenden Grundmodul ein Lagersitz zur Drehlagerung des jeweiligen Wellenmoduls beziehungsweise der gesamten Motorwelle erstellt wird.

Ausweislich Patentanspruch 3 geht die Erzeugung des oder der weiteren Funktionsmerkmale, hier: des Lagersitzes zur Drehlagerung des Wellenmoduls beziehungsweise der Motorwelle, der Herstellung des modulseitigen Anbindungselements voraus. Alternativ ist aber auch eine Erstellung des oder der weiteren Funktionsmerkmale gleichzeitig mit oder nach der Erzeugung des modulseitigen Anbindungselements an dem Grundmodul des betreffenden Wellenmoduls denkbar.

Zusätzlich oder alternativ zu einem Lagersitz zur Drehlagerung des betreffenden Wellenmoduls oder der Motorwelle wird in Weiterbildung der Erfindung an dem Grundmodul des betreffenden Wellenmoduls eine Kupplungseinrichtung erstellt (Patentanspruch 4). Die Kupplungseinrichtung kann beispielsweise genutzt werden, um die Motorwelle mit einer Arbeitsmaschine direkt oder mit dem Getriebe einer Arbeitsmaschine zu verbinden.

Ausweislich Patentanspruch 5 setzt sich die Motorwelle eines Elektromotors aus Wellenmodulen zusammen, von denen eines als Ankermodul dem Anker des betreffenden Elektromotors zugeordnet ist und ein anderes als Kupplungsmodul verwendet wird, um die Motorwelle beispielsweise mit einer Arbeitsmaschine zu kuppeln. In weiterer Ausgestaltung der Erfindung wird das Ankermodul der Motorwelle nicht nur mit einem modulseitigen Anbindungselement sondern darüber hinaus auch mit einem Sitz für den Anker des Elektromotors versehen (Patentanspruch 6). Bevorzugtermaßen wird im Falle der Erfindung der Sitz für den Anker des Elektromotors durch Kaltumformen, insbesondere Axialformen oder Rundkneten des Grundmoduls des betreffenden Wellenmoduls gefertigt.

Gemäß Patentanspruch 7 ist in Weiterbildung der Erfindung vorgesehen, dass das erste Modul der Motorwelle und das weitere Modul der Motorwelle durch umformendes Fügen miteinander verbunden werden. Durch umformendes Fügen kann zwischen den Wellenmodulen eine Verbindung hergestellt werden, die insbesondere auch in axialer Richtung der Motorwelle lastaufnahmefähig ist. Ergänzend oder alternativ kommen zum Verbinden der Wellenmodule Fügeverfahren in Frage, aufgrund derer sich zwischen den Wellenmodulen eine formschlüssige und/oder eine stoffschlüssige Verbindung ergibt, wobei die stoffschlüssige Verbindung beispielsweise als Klebeverbindung ausgeführt sein kann. Generell denkbar sind hybride Verbindungen, beispielsweise Verbindungen, im Falle derer ein Formschluss und ein Kraftschluss oder ein Formschluss und ein Stoffschluss miteinander kombiniert sind. Von Vorteil ist insbesondere eine in Umlaufrichtung der Motorwelle wirksame Formschlussverbindung zwischen den Wellenmodulen.

Nachfolgend wird die Erfindung anhand beispielhafter schematischer Darstellungen näher erläutert. Es zeigen:
- Figur 1: eine modular aufgebaute Motorwelle eines Elektromotors,
- Figur 2: die Wellenmodule, aus denen die Motorwelle gemäß Figur 1 besteht und

- Figur 3: Darstellungen zur Veranschaulichung des Verfahrens zur Herstellung der Motorwelle gemäß Figur 1.

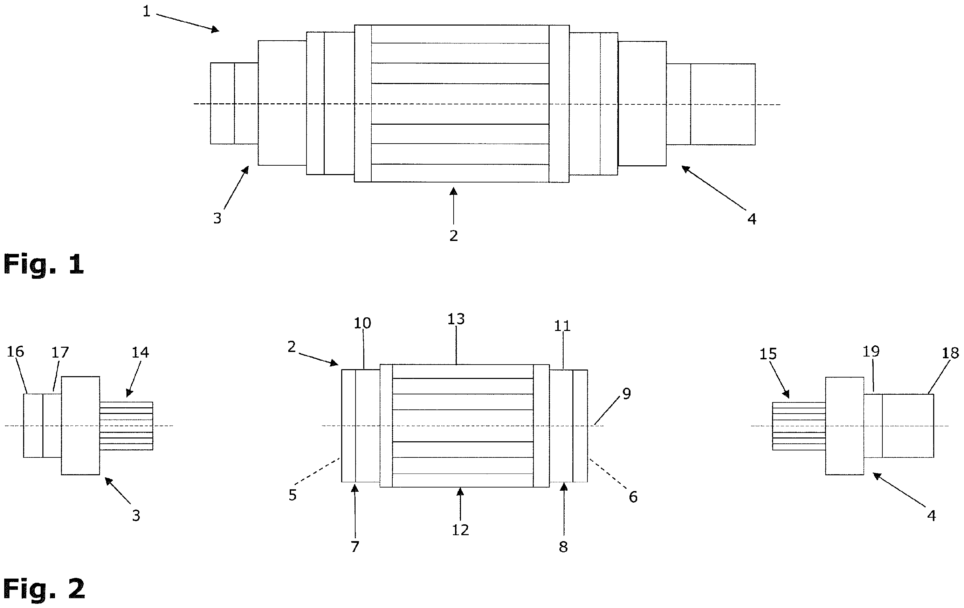

Ausweislich der Figuren 1 und 2 besteht eine modular aufgebaute Motorwelle 1 eines Elektromotors aus einem als Ankermodul 2 vorgesehenen ersten Modul sowie aus weiteren Modulen, bei denen es sich in dem dargestellten Beispielsfall um Kupplungsmodule 3, 4 handelt.

Das Ankermodul 2 ist an der dem Kupplungsmodul 3 zugeordneten Seite mit einem ersten modulseitigen Anbindungselement 5 und an der dem Kupplungsmodul 4 zugeordneten Seite mit einem zweiten modulseitigen Anbindungselement 6 versehen. Das erste modulseitige Anbindungselement 5 des Ankermoduls 2 ist als Verzahnung ausgebildet, die in die Innenwand eines hohlzylindrischen Längenabschnitts 7 des Ankermoduls 2 eingeformt ist. Entsprechend ist als zweites modulseitiges Anbindungselement 6 des Ankermoduls 2 eine in die Innenwand eines hohlzylindrischen Längenabschnitts 8 des Ankermoduls 2 eingeformte Verzahnung vorgesehen. Beide Verzahnungen sind in den Figuren 1 bis 3 verdeckt und bestehen aus Zähnen, die sich parallel zu einer Wellenachse 9 der Motorwelle 1 erstrecken.

An der Außenseite des hohlzylindrischen Längenabschnitts 7 des Ankermoduls 2 befindet sich ein Lagersitz 10 für ein nicht gezeigtes Wälzlager zur Drehlagerung der Motorwelle 1. Entsprechend ist der hohlzylindrische Längenabschnitt 8 des Ankermoduls 2 mit einem Lagersitz 11 für ein Wälzlager zur Drehlagerung der Motorwelle 1 versehen. An einem zwischen den hohlzylindrischen Längenabschnitten 7, 8 angeordneten Mittelteil 12 des Ankermoduls 2 ist ein Sitz 13 für einen ebenfalls nicht dargestellten Anker des Elektromotors, im Einzelnen für ein Blechpaket des Ankers, ausgebildet.

Das Kupplungsmodul 3 weist an der dem Ankermodul 2 zugeordneten Seite als modulseitiges Anbindungselement 14 ein mit einer Außenverzahnung versehenes Modulende auf, das baugleich ist mit einem modulseitigen Anbindungselement 15 des Kupplungsmoduls 4.

Die Außenverzahnungen an den Kupplungsmodulen 3, 4 sind hinsichtlich ihrer Geometrie auf die als modulseitige Anbindungselemente 5, 6 des Ankermoduls 2 vorgesehenen Innenverzahnungen abgestimmt. Die Außenverzahnungen an den Kupplungsmodulen 3, 4 einerseits und die Innenverzahnungen an dem Ankermodul 2 andererseits können folglich miteinander in Eingriff gebracht werden, wobei die miteinander kämmenden Außen- und Innenverzahnungen um die Wellenachse 9 spielfrei aneinander abgestützt sind.

An der von dem modulseitigen Anbindungselement 14 abliegenden Seite ist das Kupplungsmodul 3 mit einer Kupplungseinrichtung 16 versehen, die in dem dargestellten Beispielsfall als im Querschnitt polygonales Modulende ausgebildet ist.

In axialer Richtung des Kupplungsmoduls 3 grenzt an die Kupplungseinrichtung 16 unmittelbar ein Sitz 17 für den wellenseitigen Teil eines Drehgebers zur Messung der Drehzahl der Motorwelle 1 an.

Das Kupplungsmodul 4 weist an der von dem modulseitigen Anbindungselement 15 abliegenden Seite eine Kupplungseinrichtung 18 auf, die mit der Kupplungseinrichtung 16 an dem Kupplungsmodul 3 insoweit übereinstimmt, als auch die Kupplungseinrichtung 18 ein im Querschnitt polygonales Modulende ausbildet. In ihrer Beschaffenheit unterscheiden sich die Kupplungseinrichtung 16 des Kupplungsmoduls 3 und die Kupplungseinrichtung 18 des Kupplungsmoduls 4 insofern voneinander, als die Kupplungseinrichtung 18 eine größere axiale Länge besitzt als die Kupplungseinrichtung 16. Ein Sitz 19 für einen wellenseitigen Teil des Drehgebers zur Messung der Drehzahl der Motorwelle 1 ist an dem Kupplungsmodul 4 der Kupplungseinrichtung 18 in axialer Richtung unmittelbar benachbart.

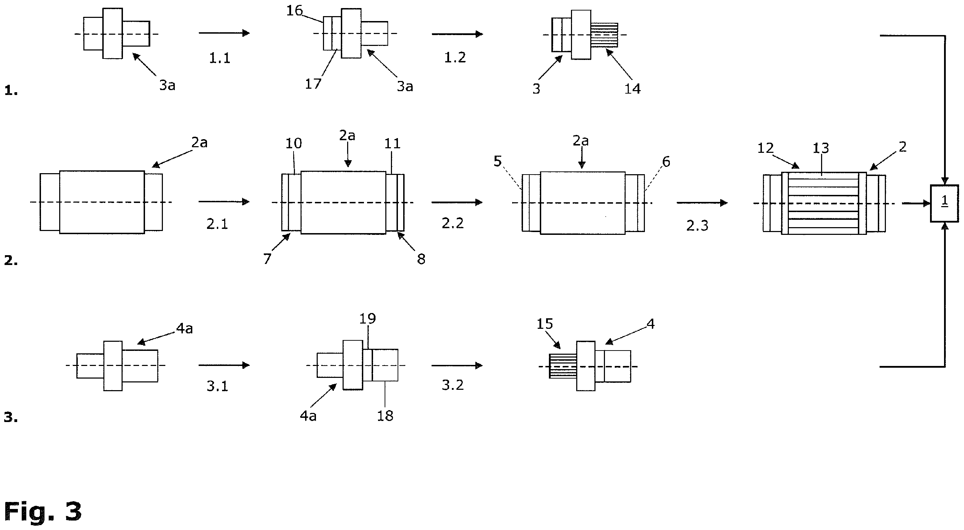

Der Ablauf des Verfahrens zur Herstellung der Motorwelle 1 ist in Figur 3 veranschaulicht, wobei die Verfahrensschritte zu 1. das Kupplungsmodul 3, die Verfahrensschritte zu 2. das Ankermodul 2 und die Verfahrensschritte zu 3. das Kupplungsmodul 4 betreffen.

Die Darstellungen zur Veranschaulichung der Herstellung des Kupplungsmoduls 3 beginnen mit der Darstellung eines als Halbzeug vorliegenden Grundmoduls 3a. Das Grundmodul 3a ist in dem dargestellten Beispielsfall durch spanendes Trennen aus einem stählernen Rohling gefertigt worden. Alternativ hätte unter anderem die Möglichkeit bestanden, das Grundmodul 3a durch Umformen, beispielsweise durch Warmumformen oder durch Rundkneten aus einem entsprechenden Rohling herzustellen.

In dem Verfahrensschritt 1.1 wird das Grundmodul 3a durch trennende Bearbeitung mit dem Sitz 17 für den wellenseitigen Teil des Drehgebers versehen. Außerdem wird das Grundmodul 3a in dem an den Sitz 17 unmittelbar angrenzenden Bereich zu der Kupplungseinrichtung 16 umgeformt.

In dem Verfahrensschritt 1.2 wird an der von der Kupplungseinrichtung 16 und dem Sitz 17 abliegenden Seite des Grundmoduls 3a durch trennende Bearbeitung die als modulseitiges Anbindungselement 14 vorgesehene Außenverzahnung erzeugt. Damit ist die Herstellung des Kupplungsmoduls 3 abgeschlossen.

In entsprechender Weise werden aus einem gleichfalls stählernen Rohling ein Grundmodul 4a für das Kupplungsmodul 4 gefertigt und aus dem Grundmodul 4a unter Erstellen des Sitzes 19 für den wellenseitigen Teil des Drehgebers, der Kupplungseinrichtung 18 und des modulseitigen Anbindungselements 15 das Kupplungsmodul 4 hergestellt.

Ausgangspunkt für die Fertigung des Ankermoduls 2 ist ein stählernes Grundmodul 2a, das durch trennende oder umformende Bearbeitung eines Rohlings als Halbzeug erstellt worden ist.

In dem Verfahrensschritt 2.1 werden an dem Grundmodul 2a endseitig durch trennende Bearbeitung die Lagersitze 10, 11 erzeugt und anschließend gleichfalls durch trennende Bearbeitung des Grundmoduls 2a die hohlzylindrischen Längenabschnitte 7, 8 erstellt. In dem Verfahrensschritt 2.2 werden dann die achsparallelen Innenwände der hohlzylindrischen Längenabschnitte 7, 8 in dem gezeigten Beispielsfall durch Kaltumformen, im Einzelnen durch Axialformen, mit den als modulseitige Anbindungselemente 5, 6 vorgesehenen Innenverzahnungen versehen.

An die Herstellung der modulseitigen Anbindungselemente 5, 6 schließt sich in dem Verfahrensschritt 2.3 die Herstellung des Sitzes 13 für den Anker des Elektromotors an. Zu diesem Zweck werden durch Kaltumformen an dem Mittelteil 12 des damit fertiggestellten Ankermoduls 2 Verbindungselemente erzeugt, mittels derer das Blechpaket des Ankers auf dem Mittelteil 12 des Ankermoduls 2 fixiert werden kann.

Abschließend wird durch einen in Figur 3 durch Pfeile angedeuteten Fügevorgang die Motorwelle 1 aus dem Ankermodul 2 und den Kupplungsmodulen 3, 4 zusammengebaut. Zu diesem Zweck werden das modulseitige Anbindungselement bzw. die Außenverzahnung 14 an dem Kupplungsmodul 3 in den hohlzylindrischen Längenabschnitt 7 an dem Ankermodul 2 und das modulseitige Anbindungselement bzw. die Außenverzahnung 15 an dem Kupplungsmodul 4 in den hohlzylindrischen Längenabschnitt 8 des Ankermoduls 2 eingeschoben. Befinden sich die beiderseitigen Anbindungselemente 5, 14; 6, 15 miteinander im Eingriff, so wird durch Ausüben einer radial nach innen gerichteten Kraft auf die Außenseite der hohlzylindrischen Längenabschnitte 7, 8 und durch ein damit verbundenes Umformen der hohlzylindrischen Längenabschnitte 7, 8 zusätzlich ein Kraftschluss zwischen den beiderseitigen modulseitigen Anbindungselementen 5, 14; 6, 15 hergestellt.

Die miteinander kämmenden Verzahnungen der modulseitigen Anbindungselemente 5, 14; 6, 15 erzeugen eine formschlüssige Verbindung zwischen dem Ankermodul 2 und den Kupplungsmodulen 3, 4, aufgrund derer die Motorwelle 1 in der Lage ist, Kräfte in Umlaufrichtung um die Wellenachse 9 zu übertragen. Durch den in axialer Richtung wirkenden Kraftschluss zwischen den modulseitigen Anbindungselementen 5, 14; 6, 15 sind das Ankermodul 2 und die Kupplungsmodule 3 und 4 in axialer Richtung der Motorwelle 1 aneinander festgelegt.

Bei Bedarf können sich an die vorstehenden Verfahrensschritte bei der Herstellung der Motorwelle 1 weitere Verfahrensschritte anschließen. Denkbar ist insbesondere ein sich an das Fügen der modulseitigen Anbindungselemente 5, 14; 6, 15 anschließendes trennendes und/oder umformendes Verfahren zur Begrenzung von an der Motorwelle 1 auftretenden Fertigungstoleranzen auf ein zulässiges Maß.

Nachdem das Kupplungsmodul 3 mittels des modulseitigen Anbindungselements 14 nicht nur an dem modulseitigen Anbindungselement 5 des Ankermoduls 2 sondern auch an dem modulseitigen Anbindungselement 6 des Ankermoduls 2 mit diesem verbunden werden kann und nachdem auch eine Verbindung zwischen dem Kupplungsmodul 4 und dem Ankermodul 2 nicht nur an dem modulseitigen Anbindungselement 6 sondern auch an dem modulseitigen Anbindungselement 5 des Ankermoduls 2 möglich ist, bilden das Ankermodul 2 und die als weitere Module vorgesehenen Kupplungsmodule 3, 4 einen Modulsatz, dessen Module in unterschiedlicher Weise zu einer Motorwelle kombiniert werden können und der dementsprechend die Möglichkeit bietet, Motorwellen für unterschiedliche Anwendungsfälle zu konfigurieren.

## Patentansprüche

1. Verfahren zur Herstellung einer Motorwelle (1) eines Rotors eines Elektromotors, im Rahmen dessen ein erstes Modul (2) der Motorwelle (1) sowie ein weiteres Modul (3, 4) der Motorwelle (1) hergestellt und miteinander verbunden werden,
• wobei das erste Modul (2) der Motorwelle (1) hergestellt wird, indem ein Grundmodul (2a) des ersten Moduls (2) an einer dem weiteren Modul (3, 4) der Motorwelle (1) zugeordneten Seite mit einem modulseitigen Anbindungselement (5, 6) versehen wird,
• wobei das weitere Modul (3, 4) der Motorwelle (1) hergestellt wird, indem ein Grundmodul (3a, 4a) des weiteren Moduls (3, 4) an einer dem ersten Modul (2) der Motorwelle (1) zugeordneten Seite mit einem modulseitigen Anbindungselement (14, 15) versehen wird und
• wobei das erste Modul (2) der Motorwelle (1) und das weitere Modul (3, 4) der Motorwelle (1) durch Fügen der beiderseitigen modulseitigen Anbindungselemente (5, 6, 14, 15) miteinander verbunden werden,
**dadurch gekennzeichnet,**
• **dass** das erste Modul (2) der Motorwelle (1) oder das weitere Modul (3, 4) der Motorwelle (1) durch Kaltumformen in Form von Axialformen des jeweiligen Grundmoduls (2a, 3a, 4a) mit dem modulseitigen Anbindungselement (5, 6, 14, 15) versehen wird und
• **dass** das jeweils andere Modul (2, 3, 4) durch trennende Bearbeitung des betreffenden Grundmoduls (2a, 3a, 4a) mit dem modulseitigen Anbindungselement (5, 6, 14, 15) versehen wird.

2. Verfahren nach Anspruch 1, **dadurch gekennzeichnet, dass** das erste Modul (2) der Motorwelle (1) und/oder das weitere Modul (3, 4) der Motorwelle (1) hergestellt wird beziehungsweise werden, indem das betreffende Grundmodul (2a, 3a, 4a) mit einem Lagersitz (10, 11) zur Drehlagerung der Motorwelle (1) versehen wird.

3. Verfahren nach Anspruch 2, **dadurch gekennzeichnet, dass** das erste Modul (2) der Motorwelle (1) und/oder das weitere Modul (3, 4) der Motorwelle (1) hergestellt wird beziehungsweise werden, indem das betreffende Grundmodul (2a, 3a, 4a) zunächst mit dem Lagersitz (10, 11) zur Drehlagerung der Motorwelle (1) und anschließend mit dem modulseitigen Anbindungselement (5, 6, 14, 15) versehen wird.

4. Verfahren nach einem der vorhergehenden Ansprüche, **dadurch gekennzeichnet, dass** das erste Modul (2) der Motorwelle (1) und/oder das weitere Modul (3, 4) der Motorwelle (1) hergestellt wird beziehungsweise werden, indem das betreffende Grundmodul (2a, 3a, 4a) an der von dem modulseitigen Anbindungselement (5, 6, 14, 15) abliegenden Seite mit einer Kupplungseinrichtung (16, 18) versehen wird.

5. Verfahren nach einem der vorhergehenden Ansprüche, **dadurch gekennzeichnet, dass** von dem ersten Modul (2) und dem weiteren Modul (3, 4) der Motorwelle (1) eines der Module (2, 3, 4) als Ankermodul und das andere der Module (2, 3, 4) als Kupplungsmodul hergestellt wird.

6. Verfahren nach Anspruch 5, **dadurch gekennzeichnet, dass** das Ankermodul der Motorwelle (1) hergestellt wird, indem das betreffende Grundmodul (2a) mit einem Sitz (13) für einen Anker des Elektromotors (1) versehen wird.

7. Verfahren nach einem der vorhergehenden Ansprüche, **dadurch gekennzeichnet, dass** das erste Modul (2) der Motorwelle (1) und das weitere Modul (3, 4) der Motorwelle (1) durch umformendes Fügen und/oder durch formschlüssiges Fügen und/oder durch stoffschlüssiges Fügen, insbesondere Verkleben, der beiderseitigen modulseitigen Anbindungselemente (5, 6, 14, 15) miteinander verbunden werden.

8. Modulsatz zur Herstellung einer Motorwelle (1) eines Rotors eines Elektromotors nach dem Verfahren gemäß einem der vorhergehenden Ansprüche, umfassend ein erstes Modul (2) sowie zwei weitere Module (3, 4) unterschiedlicher Beschaffenheit,
• wobei das erste Modul (2) der Motorwelle (1) an einer einem weiteren Modul (3, 4) der Motorwelle (1) zugeordneten Seite mit einem modulseitigen Anbindungselement (5, 6) versehen ist,
• wobei jedes der weiteren Module (3, 4) der Motorwelle (1) an einer dem ersten Modul (2) der Motorwelle (1) zugeordneten Seite mit einem modulseitigen Anbindungselement (14, 15) versehen ist,
**dadurch gekennzeichnet,**
• **dass** das erste Modul (2) der Motorwelle (1) mit einem durch Kaltumformen in Form von Axialformen eines Grundmoduls (2a, 3a, 4a) hergestellten modulseitigen Anbindungselement (5, 6, 14, 15) versehen ist,
• **dass** jedes der weiteren Module (2, 3, 4) mit einem durch trennende Bearbeitung des betreffenden Grundmoduls (2a, 3a, 4a) hergestellten modulseitigen Anbindungselement (5, 6, 14, 15) versehen ist und
• **dass** das erste Modul (2) der Motorwelle (1) durch Fügen seines modulseitigen Anbindungselements (5, 6) und eines modulseitigen Anbindungselements (14, 15) eines der weiteren Module (3, 4) der Motorwelle (1) wahlweise mit einem der weiteren Module (3, 4) verbindbar ist.

9. Motorwelle eines Rotors eines Elektromotors, umfassend ein erstes Modul (2) sowie ein weiteres Modul (3, 4)
• wobei das erste Modul (2) der Motorwelle (1) an einer dem weiteren Modul (3, 4), der Motorwelle (1) zugeordneten Seite mit einem modulseitigen Anbindungselement (5, 6) versehen ist,
• wobei das weitere Modul (3, 4) der Motorwelle (1) an einer dem ersten Modul (2) der Motorwelle (1) zugeordneten Seite mit einem modulseitigen Anbindungselement (14, 15) versehen ist und
• wobei das erste Modul (2) der Motorwelle (1) und das weitere Modul (3, 4) der Motorwelle (1) mittels einer Fügeverbindung zwischen den beiderseitigen modulseitigen Anbindungselementen (5, 6, 14, 15) miteinander verbunden sind,
**dadurch gekennzeichnet,**
• **dass** das modulseitige Anbindungselement (5, 6) des ersten Moduls (2) der Motorwelle (1) oder das modulseitige Anbindungselement (14, 15) des weiteren Moduls (3, 4) der Motorwelle (1) als durch Kaltumformen in Form von Axialformen eines Grundmoduls (2a, 3a, 4a) hergestelltes modulseitiges Anbindungselement (5, 6, 14, 15) ausgebildet ist und
• **dass** das modulseitige Anbindungselement (5, 6, 14, 15) des jeweils anderen Moduls (2, 3, 4) als durch trennende Bearbeitung des betreffenden Grundmoduls (2a, 3a, 4a) hergestelltes modulseitiges Anbindungselement (5, 6, 14, 15) ausgebildet ist.

## Claims

1. Method for producing a motor shaft (1) of a rotor of an electric motor, in which method a first module (2) of the motor shaft (1) and an additional module (3, 4) of the motor shaft (1) are produced and interconnected,
• the first module (2) of the motor shaft (1) being produced by a base module (2a) of the first module (2) being provided with a module-side connection element (5, 6) at a side assigned to the additional module (3, 4) of the motor shaft (1),
• the additional module (3, 4) of the motor shaft (1) being produced by a base module (3a, 4a) of the additional module (3, 4) being provided with a module-side connection element (14, 15) at a side assigned to the first module (2) of the motor shaft (1), and
• the first module (2) of the motor shaft (1) and the additional module (3, 4) of the motor shaft (1) being interconnected by joining the mutual module-side connection elements (5, 6, 14, 15),
**characterised**
• **in that** the first module (2) of the motor shaft (1) or the additional module (3, 4) of the motor shaft (1) is provided with the module-side connection element (5, 6, 14, 15) by cold forming in the form of axial forming the respective base module (2a, 3a, 4a) and
• **in that** the respective other module (2, 3, 4) is provided with the module-side connection element (5, 6, 14, 15) by separating machining the respective base module (2a, 3a, 4a).

2. Method according to claim 1, **characterised in that** the first module (2) of the motor shaft (1) and/or the additional module (3, 4) of the motor shaft (1) is or are produced by the respective base module (2a, 3a, 4a) being provided with a bearing seat (10, 11) for rotatably mounting the motor shaft (1).

3. Method according to claim 2, **characterised in that** the first module (2) of the motor shaft (1) and/or the additional module (3, 4) of the motor shaft (1) is or are produced by the respective base module (2a, 3a, 4a) being provided first with the bearing seat (10, 11) for rotatably mounting the motor shaft (1) and then with the module-side connection element (5, 6, 14, 15).

4. Method according to any one of the preceding claims, **characterised in that** the first module (2) of the motor shaft (1) and/or the additional module (3, 4) of the motor shaft (1) is or are produced by the respective base module (2a, 3a, 4a) being provided with a coupling means (16, 18) at the side remote from the module-side connection element (5, 6, 14, 15).

5. Method according to any one of the preceding claims, **characterised in that**, from the first module (2) and the additional module (3, 4) of the motor shaft (1), one of the modules (2, 3, 4) is produced as an anchor module and the other module (2, 3, 4) is produced as a coupling module.

6. Method according to claim 5, **characterised in that** the anchor module of the motor shaft (1) is produced by the respective base module (2a) being provided with a seat (13) for an anchor of the electric motor.

7. Method according to any one of the preceding claims, **characterised in that** the first module (2) of the motor shaft (1) and the additional module (3, 4) of the motor shaft (1) are interconnected by joining by forming and/or by interlockingly joining and/or by substance-to-substance joining, in particular adhesively bonding, the mutual module-side connection elements (5, 6, 14, 15).

8. Set of modules for producing a motor shaft (1) of a rotor of an electric motor in accordance with the method according to any one of the preceding claims, comprising a first module (2) and two additional modules (3, 4) of different characteristics,
• the first module (2) of the motor shaft (1) being provided with a module-side connection element (5, 6) at a side assigned to an additional module (3, 4) of the motor shaft (1),
• each of the additional modules (3, 4) of the motor shaft (1) being provided with a module-side connection element (14, 15) at a side assigned to the first module (2) of the motor shaft (1),
**characterised**
• **in that** the first module (2) of the motor shaft (1) is provided with a module-side connection element (5, 6, 14, 15) produced by cold forming in the form of axial forming a base module (2a, 3a, 4a),
• **in that** each of the additional modules (2, 3, 4) is provided with a module-side connection element (5, 6, 14, 15) produced by separating machining the respective base module (2a, 3a, 4a) and
• **in that** the first module (2) of the motor shaft (1) can optionally be connected to one of the additional modules (3, 4) by joining its module-side connection element (5, 6) and a module-side connection element (14, 15) of one of the additional modules (3, 4) of the motor shaft (1).

9. Motor shaft of a rotor of an electric motor, comprising a first module (2) and an additional module (3, 4),
• the first module (2) of the motor shaft (1) being provided with a module-side connection element (5, 6) at a side assigned to the additional module (3, 4) of the motor shaft (1),
• the additional module (3, 4) of the motor shaft (1) being provided with a module-side connection element (14, 15) at a side assigned to the first module (2) of the motor shaft (1), and
• the first module (2) of the motor shaft (1) and the additional module (3, 4) of the motor shaft (1) being interconnected by means of a joint connection between the mutual module-side connection elements (5, 6, 14, 15),
**characterised**
• **in that** the module-side connection element (5, 6) of the first module (2) of the motor shaft (1) or the module-side connection element (14, 15) of the additional module (3, 4) of the motor shaft (1) is formed as a module-side connection element (5, 6, 14, 15) produced by cold forming in the form of axial forming a base module (2a, 3a, 4a) and
• **in that** the module-side connection element (5, 6, 14, 15) of the respective other module (2, 3, 4) is formed as a module-side connection element (5, 6, 14, 15) produced by separating machining of the respective base module (2a, 3a, 4a).

## Revendications

1. Procédé de fabrication d'un arbre moteur (1) d'un rotor d'un moteur électrique, dans le cadre duquel un premier module (2) de l'arbre moteur (1), ainsi qu'un module additionnel (3, 4) dudit arbre moteur (1), sont fabriqués et reliés l'un à l'autre,
• le premier module (2) de l'arbre moteur (1) étant fabriqué en munissant un module de base (2a) dudit premier module (2) d'un élément de rattachement (5, 6) situé côté module, sur un côté associé au module additionnel (3, 4) dudit arbre moteur (1),
• ledit module additionnel (3, 4) de l'arbre moteur (1) étant fabriqué en munissant un module de base (3a, 4a) dudit module additionnel (3, 4) d'un élément de rattachement (14, 15) situé côté module, sur un côté associé audit premier module (2) de l'arbre moteur (1), et
• le premier module (2) de l'arbre moteur (1), et le module additionnel (3, 4) dudit arbre moteur (1), étant reliés l'un à l'autre par assemblage desdits éléments de rattachement (5, 6, 14, 15) situés côté module et disposés de part et d'autre,
**caractérisé par le fait**
• **que** le premier module (2) de l'arbre moteur (1) ou le module additionnel (3, 4) dudit arbre moteur (1) est muni de l'élément de rattachement (5, 6, 14, 15), situé côté module, par formage à froid se présentant comme un formage axial du module de base (2a, 3a, 4a) respectif, et
• **que** l'autre module considéré (2, 3, 4) est muni de l'élément de rattachement (5, 6, 14, 15), situé côté module, par usinage séparatif du module de base (2a, 3a, 4a) concerné.

2. Procédé selon la revendication 1, **caractérisé par le fait que** le premier module (2) de l'arbre moteur (1) et/ou le module additionnel (3, 4) dudit arbre moteur (1) est, ou sont respectivement fabriqué(s) en munissant le module de base concerné (2a, 3a, 4a) d'un siège de palier (10, 11) dévolu au montage rotatif dudit arbre moteur (1).

3. Procédé selon la revendication 2, **caractérisé par le fait que** le premier module (2) de l'arbre moteur (1) et/ou le module additionnel (3, 4) dudit arbre moteur (1) est, ou sont respectivement fabriqué(s) en munissant le module de base concerné (2a, 3a, 4a) du siège de palier (10, 11) dévolu au montage rotatif dudit arbre moteur (1), dans un premier temps, puis de l'élément de rattachement (5, 6, 14, 15) situé côté module.

4. Procédé selon l'une des revendications précédentes, **caractérisé par le fait que** le premier module (2) de l'arbre moteur (1) et/ou le module additionnel (3, 4) dudit arbre moteur (1) est, ou sont respectivement fabriqué(s) en munissant le module de base concerné (2a, 3a, 4a) d'un dispositif de couplage (16, 18) sur le côté pointant à l'opposé de l'élément de rattachement (5, 6, 14, 15) situé côté module.

5. Procédé selon l'une des revendications précédentes, **caractérisé par le fait qu'**au sein du premier module (2) et du module additionnel (3, 4) de l'arbre moteur (1), l'un des modules (2, 3, 4) est fabriqué en tant que module d'induit et l'autre, parmi lesdits modules (2, 3, 4), est fabriqué en tant que module de couplage.

6. Procédé selon la revendication 5, **caractérisé par le fait que** le module d'induit de l'arbre moteur (1) est fabriqué en munissant le module de base concerné (2a) d'un siège (13) destiné à un induit du moteur électrique.

7. Procédé selon l'une des revendications précédentes, **caractérisé par le fait que** le premier module (2) de l'arbre moteur (1) et le module additionnel (3, 4) dudit arbre moteur (1) sont reliés l'un à l'autre par assemblage par déformation et/ou par assemblage par complémentarité de formes et/ou par assemblage matériel, notamment par collage, des éléments de rattachement (5, 6, 14, 15) situés côté module et disposés de part et d'autre.

8. Ensemble modulaire dédié à la fabrication d'un arbre moteur (1) d'un rotor d'un moteur électrique d'après le procédé conforme à l'une des revendications précédentes, comprenant un premier module (2), ainsi que deux modules additionnels (3, 4) de constitutions différentes,
• le premier module (2) de l'arbre moteur (1) étant muni d'un élément de rattachement (5, 6), situé côté module, sur un côté associé à un module additionnel (3, 4) dudit arbre moteur (1),
• chacun des modules additionnels (3, 4) dudit arbre moteur (1) étant muni d'un élément de rattachement (14, 15), situé côté module, sur un côté associé audit premier module (2) de l'arbre moteur (1),
**caractérisé par le fait**
• **que** le premier module (2) de l'arbre moteur (1) est muni d'un élément de rattachement (5, 6, 14, 15) situé côté module et fabriqué par formage à froid d'un module de base (2a, 3a, 4a), se présentant comme un formage axial,
• **que** chacun des modules additionnels (3, 4) est muni d'un élément de rattachement (5, 6, 14, 15) situé côté module et fabriqué par usinage séparatif du module de base (2a, 3a, 4a) concerné, et
• **que** ledit premier module (2) de l'arbre moteur (1) peut être relié sélectivement à l'un des modules additionnels (3, 4) par assemblage de son élément de rattachement (5, 6), situé côté module, et d'un élément de rattachement (14, 15), situé côté module, de l'un des modules additionnels (3, 4) dudit arbre moteur (1).

9. Arbre moteur d'un rotor d'un moteur électrique, comprenant un premier module (2), ainsi qu'un module additionnel (3, 4),
• le premier module (2) de l'arbre moteur (1) étant muni d'un élément de rattachement (5, 6), situé côté module, sur un côté associé au module additionnel (3, 4) dudit arbre moteur (1),
• ledit module additionnel (3, 4) dudit arbre moteur (1) étant muni d'un élément de rattachement (14, 15), situé côté module, sur un côté associé audit premier module (2) de l'arbre moteur (1), et
• ledit premier module (2) de l'arbre moteur (1) et ledit module additionnel (3, 4) dudit arbre moteur (1) étant reliés l'un à l'autre au moyen d'une jonction d'assemblage entre les éléments de rattachement (5, 6, 14, 15) situés côté module et disposés de part et d'autre,
**caractérisé par le fait**
• **que** l'élément de rattachement (5, 6) du premier module (2) de l'arbre moteur (1), situé côté module, ou l'élément de rattachement (14, 15) du module additionnel (3, 4) dudit arbre moteur (1), situé côté module, est réalisé sous la forme d'un élément de rattachement (5, 6, 14, 15) situé côté module et fabriqué par formage à froid d'un module de base (2a, 3a, 4a), se présentant comme un formage axial, et
• **que** l'élément de rattachement (5, 6, 14, 15) de l'autre module considéré (2, 3, 4), situé côté module, est réalisé sous la forme d'un élément de rattachement (5, 6, 14, 15) situé côté module et fabriqué par usinage séparatif du module de base (2a, 3a, 4a) concerné.
